# EUROPEAN PATENT SPECIFICATION

(11) **EP 2 261 060 B1**
(45) Date of publication and mention of the grant of the patent: **30.07.2014**
(21) Application number: 10004711.7
(22) Date of filing: 04.05.2010
(51) Int. Cl.: B60C 9/22

(54) **Motorcycle tire**
Motorradreifen
Pneu de motocyclette

(30) Priority: 12.06.2009 JP 2009141343
(43) Date of publication of application: 15.12.2010
(73) Proprietor: Sumitomo Rubber Industries, Ltd., Hyogo-ken (JP)
(72) Inventor: Kumamoto, Teruka, Kobe-shi Hyogo 651-0072 (JP)
(74) Representative: Manitz, Finsterwald & Partner GbR

(56) References cited:
- EP-A1- 0 808 730
- EP-A1- 0 950 546
- EP-A1- 2 116 395
- US-A- 5 647 929

## Description

### Background of the invention

The present invention relates to a pneumatic tire, more particularly to a reinforcing-cord structure for a motorcycle tire.

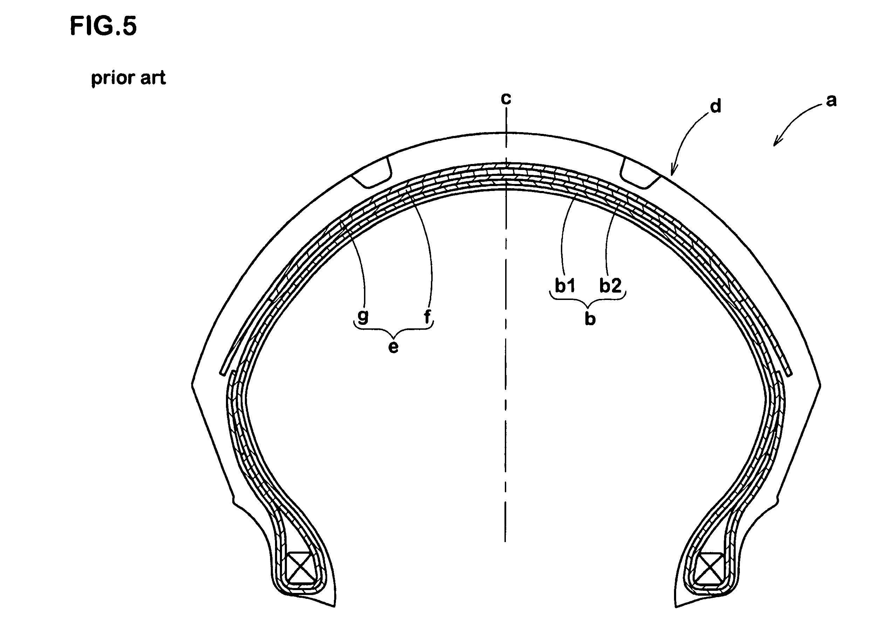

A conventional motorcycle tire (a) is shown in Fig.5, wherein a carcass (b) is composed of two carcass plies b1 and b2, and a tread reinforcement (e) disposed radially outside the carcass (b) is composed of a belt ply (f) of parallel cords inclined with respect to the tire equator (c) and disposed on the radial outside of the carcass, and a band ply (g) of parallel cords laid substantially parallel with the tire circumferential direction and disposed on the radial outside of the belt ply (f), wherein the band ply (g) extends across the substantially entire width of the tread portion (d), but the belt ply (f) does not extend across the substantially entire width.

As a result, the tread shoulder portion has a relatively low rigidity, therefore, during cornering with large lean angles in which the tread shoulder portion contacts with the ground mainly, it is difficult to obtain a sufficient cornering traction and steering response and there is a possibility that the cornering stability is deteriorated. Further, the steering response such as rigid feeling, hold-on feeling and the like is decreased with the increase in the lean angle, therefore, it is difficult for the rider to increase the lean angle at ease or with security.

Alternatively, if the tread shoulder portion has an acceptable rigidity, then the tread crown region becomes relatively high in the bending rigidity. As a result, during straight running with small lean angles, the ground contact area is decreased, and the straight running stability is deteriorated. Further, the ride comfort is deteriorated.

US 5 647 929 A discloses a motorcycle tire in accordance with the preamble of claim 1.

### Summary of the Invention

It is therefore, an object of the present invention to provide a motorcycle tire, which can improve the performances during cornering with large lean angles such as cornering traction, steering response and cornering stability, as well as the performances during straight running with small lean angles such as straight running stability and ride comfort, and thereby, the rider can travel safely and comfortably.

The object is satisfied by a motorcycle tire in accordance with the features of claim 1. Preferred embodiments of the invention are mentioned in the dependent claims.

The motorcycle tire comprises a carcass extending between bead portions through a tread portion and sidewall portions, and a tread reinforcement disposed radially outside the carcass in the tread portion, wherein the tread reinforcement is composed of:
a pair of axially-spaced shoulder reinforcing layers each disposed in one of tread shoulder portions and made of reinforcing cords inclined at an angle of from 15 to 40 degrees with respect to the tire circumferential direction; and
a full-width reinforcing layer disposed radially outside the shoulder reinforcing layers and made of at least one reinforcing cord wound helically at an angle of not more than 10 degrees with respect to the tire circumferential direction so that the full-width reinforcing layer extends across a substantially full width of the tread portion.

In the following description, various dimensions, positions and the like of the tire refer to those under a normally inflated unloaded condition of the tire unless otherwise noted.

The normally inflated unloaded condition is such that the tire is mounted on a standard wheel rim and inflate to a standard pressure but loaded with no tire load. The standard wheel rim is a wheel rim officially approved for the tire by standard organization, i.e. JATMA (Japan and Asia), T&RA (North America), ETRTO (Europe), STRO (Scandinavia) and the like. The standard pressure and the standard tire load are the maximum air pressure and the maximum tire load for the tire specified by the same organization in the Air-pressure/Maximum-load Table or similar list. For example, the standard wheel rim is the "standard rim" specified in JATMA, the "Measuring Rim" in ETRTO, the "Design Rim" in TRA or the like. The standard pressure is the "maximum air pressure" in JATMA, the "Inflation Pressure" in ETRTO, the maximum pressure given in the "Tire Load Limits at various Cold Inflation Pressures" table in TRA or the like. The standard load is the "maximum load capacity" in JATMA, the "Load Capacity" in ETRTO, the maximum value given in the above-mentioned table in TRA or the like.

### Brief Description of the Drawings

Fig.1 is a cross sectional view of a motorcycle tire according to the present invention under the normally inflated unloaded condition.
Fig.2 is a developed partial plan view showing an arrangement of the carcass plies, full-width reinforcing layer and axially-spaced shoulder reinforcing layers of the motorcycle tire shown in Fig.1.

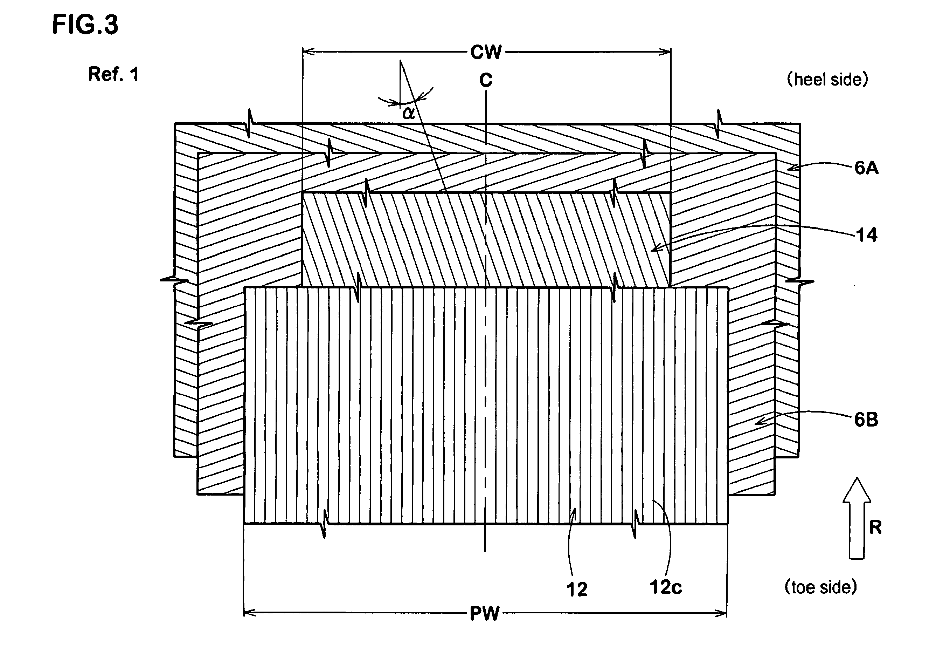

Fig.3 is a developed partial plan view showing an arrangement of the carcass plies and full-width reinforcing layer and a wide central reinforcing layer 14 of Reference tire 1 used in the undermentioned comparison tests, wherein the wide central reinforcing layer 14 is disposed instead of the axially-spaced shoulder reinforcing layers 11A and 11B.

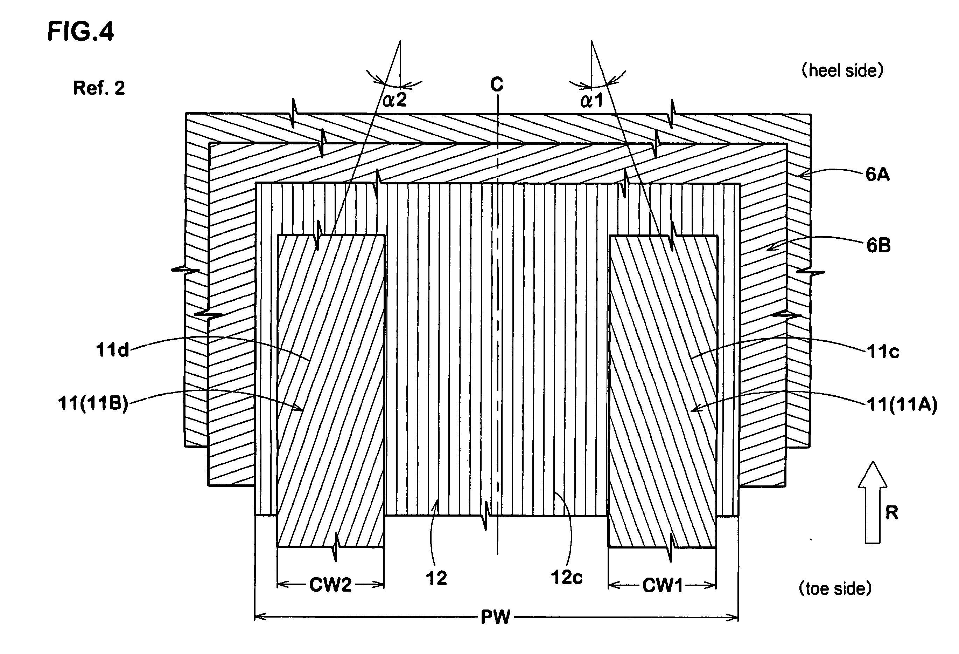

Fig.4 is a developed partial plan view showing an arrangement of the carcass plies and full-width reinforcing layer and a pair of axially-spaced shoulder reinforcing layers disposed radially outside the full-width reinforcing layer.
Fig.5 is a cross sectional view of a conventional motorcycle tire.

### Description of the Preferred Embodiments

Embodiments of the present invention will now be described in detail in conjunction with the accompanying drawings.

According to the present invention, motorcycle tire 1 comprises a tread portion 2, a pair of axially spaced bead portions 4 each with a bead core 5 therein, a pair of sidewall portions 3 extending between the tread edges 2e and the bead portions 4, a carcass 6 extending between the bead portions 4, a tread reinforcement 7 disposed radially outside the carcass 6 in the tread portion 2.

when compared with passenger car tires, truck/bus tires and the like, the tread portion 2 (inclusive of the carcass 6, tread reinforcement 7 and a tread rubber thereon) is curved with a relatively small radius of curvature as being characteristic of a motorcycle tire, and as a result, the maximum cross section width of the tire lies between the tread edges 2e.

The tread portion 2 is provided with tread grooves TG which form a unidirectional tread pattern having an intended or designed rotational direction. The intended rotational direction is indicated on the outer surfaces of the sidewall portions 3.

The above-mentioned carcass 6 and the tread reinforcement 7 constitute a reinforcing-cord structure for the motorcycle tire 1.

The carcass 6 is composed of at least one ply, in this embodiment two plies 6A and 6B, of carcass cords arranged radially at an angle γ of from 60 to 90 degrees with respect to the tire equator C and extending between the bead portions 4 through the tread portion 2 and sidewall portions 3 and turned up around the bead core 5 in each of the bead portions 4 so as to form a pair of turned-up portions 6b and a main portion 6a therebetween.

A triangular space formed in each of the bead portions 4 as surrounded by the carcass ply main portion 6a, the carcass ply turned-up portion(s) 6b and the radially outside of the bead core 5, is filled with a bead apex 8 made of a hard rubber. Thus, the bead apex 8 extends radially outwardly from the radially outside of the bead core in a tapered manner.

In the case of a plurality of carcass plies as in this embodiment, the radially outer ends of the turned-up portions 6b of the carcass plies are positioned at different radial heights, for example, such that the axially outer turned-up portion has its radially outer end at a higher position, whereby stress liable to concentrate on the radially outer ends are dispersed, and further, an abrupt change in the sidewall rigidity can be avoided.

In this embodiment, the axially outer turned-up portion 6b extends to a position near but slightly radially inside the tread edge 2e, and the axially inner turned-up portion 6b extends radially outwardly and terminates at a position in between the radially outer end of the bead apex and the radially outer end of the axially outer turned-up portion 6b.

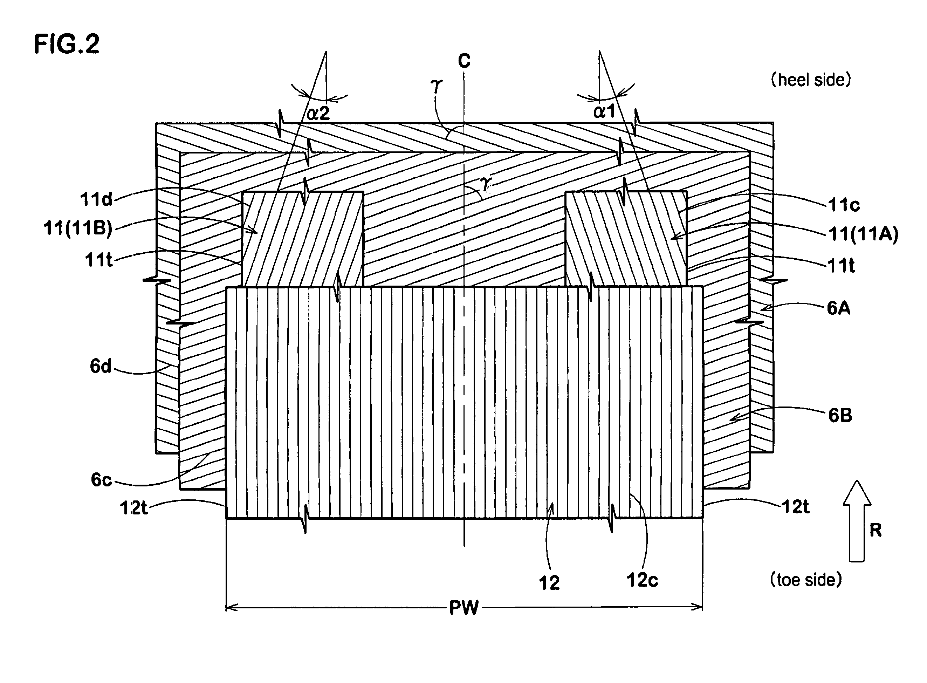

The cord angle γ of the carcass cords 6d of the carcass ply 6A and the cord angle γ of the carcass cords 6c of the carcass ply 6B have same absolute values of less than 90 degrees, but the cord inclining directions are opposite such that the carcass cords 6c cross the carcass cords 6d as shown in Fig.2.

The carcass cords (6c,6d) are organic fiber cords, e.g. polyester, rayon, nylon and the like.

The above-mentioned tread reinforcement 7 consists of a full-width reinforcing layer 12 and a pair of axially-spaced shoulder reinforcing layers 11A and 11B (generically, "11").

The shoulder reinforcing layers 11A and 11B are disposed radially outside the carcass 6, and extend in the respective shoulder regions Sh of the tread portion 2, while abutting on the radially outer surface of the carcass 6.

The shoulder reinforcing layer 11A is composed of a cut ply of rubberized parallel reinforcing cords 11c laid at an inclination angle α1 with respect to the tire circumferential direction. The shoulder reinforcing layer 11B is composed of a cut ply of rubberized parallel reinforcing cords 11d laid at an inclination angle α2 with respect to the tire circumferential direction.

In this embodiment, nylon cords are used as the reinforcing cords 11c and 11d. However, other organic fiber cords, e.g. aramid, polyester, rayon and the like, moreover steel cords can be used as well.

The inclination angle α1 and angle α2 have same absolute values but the inclining directions are opposite as shown in Fig.2.

The angles α1 and α2 are set in a range of not less than 15 degrees, preferably not less than 17 degrees, more preferably not less than 20 degrees, but not more than 40 degrees, preferably not more than 30 degrees, more preferably not more than 25 degrees.

The developed width CW1 of the shoulder reinforcing layer 11A and the developed width CW2 of the shoulder reinforcing layer 11B are set at same values in a range of not less than 25 %, preferably not less than 28 %, but not more than 40 %, preferably not more than 38 % of the developed width TW of the tread portion 2.

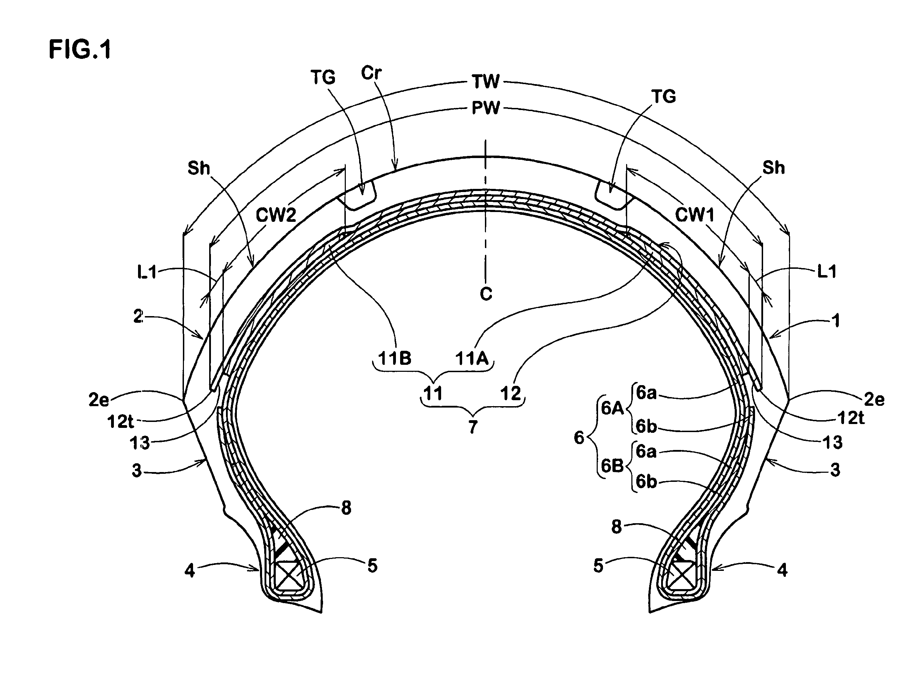

The shoulder reinforcing layers 11A and 11B are geometrically symmetrical about the tire equator C as shown in Fig.1 and Fig.2, and the layers 11A and 11B are numerically the same with respect to the width CW1, CW2, the cord angle α1, α2 and a cord count.

When a designed or intended rotational direction R of the tire is given for example according to the unidirectional tread pattern, the shoulder reinforcing layers 11A and 11B are arranged such that the reinforcing cords 11c and 11d are inclined to the axially inside (tire equator C) towards the rotational direction R as shown in Fig.2. Thereby, in a transient state from straight running to cornering, the change in the tire characteristics becomes smooth.

The full-width reinforcing layer 12 is disposed radially outside the shoulder reinforcing layers 11A and 11B and extends over the shoulder reinforcing layers 11 across the tire equator C, while abutting on the radially outer surfaces of the shoulder reinforcing layers 11 and the radially outer surface of the crown portion of the carcass 6.

The full-width reinforcing layer 12 is formed by winding at least one reinforcing cord 12c helically from one axial edge to the other axial edge thereof at an angle of not more than 10 degrees with respect to the tire circumferential direction so as to have a jointless single-layered structure.

As to the reinforcing cord(s) 12c, organic fiber cords, e.g. aramid, nylon, polyester, rayon and the like can be used. In this embodiment, an aramid cord is used.

The reinforcing cord(s) 12c is(are) rubberized with a topping rubber. In view of the production efficiency, it is preferable that a plurality of cords 12c are laid parallel each other and embedded in the topping rubber in a form of a tape.

The full-width reinforcing layer 12 extends across the substantially entire width of the tread portion so that the developed width PW of the full-width reinforcing layer 12 measured along its curve becomes 85 to 100 % of the developed width TW of the tread portion 2 measured between the tread edges 2e along the tread surface or tread profile.

In order to effectively prevent lifting of the shoulder reinforcing layers 11, the axial outer edges 12t of the full-width reinforcing layer 12 are positioned axially outside the respective axial outer edges 11t of the shoulder reinforcing layers 11 as shown in Fig.1 and Fig.2, and the developed width L1 of each edge portion 13 of the layer 12 protruding axially outwardly from the axial outer edge 11t is set in a range of not less than 2 mm, preferably not less than 3 mm, more preferably not less than 5 mm, but preferably not more than 15 mm, more preferably not more than 12 mm, still more preferably not more than 10 mm.

Accordingly, the above-mentioned reinforcing-cord structure in this embodiment has
a central part (Cr) of a three-layered structure made up of the reinforcing cord(s) 12c laid at not more than 10 degrees, the carcass cords 6c at less than 90 degrees (clockwise), and the carcass cords 6d at less than 90 degrees (counterclockwise), and a pair of lateral parts of a four-layered structure made up of the reinforcing cord(s) 12c laid at not more than 10 degrees, the reinforcing cords 11c/11d at 15-40 degrees, the carcass cords 6c at less than 90 degrees (clockwise), and the carcass cords 6d at less than 90 degrees (counterclockwise), wherein the lateral parts each has a developed width (=CW1,CW2) of not less than 25 %, but not more than 40 % of the developed width TW of the tread portion 2, and
the central part has a developed width of not less than 20 %, but not more than 50 % of the developed width TW of the tread portion 2.

Therefore, the tread crown region Cr becomes relatively low in the rigidity. As a result, during straight running, the ground contact area is increased and the straight running stability is improved. Further, the ride comfort is improved.

On the other hand, the tread shoulder regions Sh become relatively high in the rigidity. As a result, during cornering, distortion of the tread portion 2 caused by a lateral force received from the road surface can be controlled, and the cornering traction is increased, and the steering stability is improved. As the steering response such as rigid feeling and hold-on feeling at large lean angles can be improved, the rider can increase the lean angle without anxious thought, and the cornering feeling is improved.

Further, as the full-width reinforcing layer 12 is disposed as the radially outermost reinforcing layer, the lifting of the tread portion during high-speed running is controlled and the high-speed durability can be improved. As the full-width reinforcing layer 12 cover the radially outside of the splices (not shown) of the shoulder reinforcing layers, vibrations of the tire during running due to RRO of the shoulder reinforcing layers, and tire uniformity can be improved. Thus, the high-speed durability is further improved.

Furthermore, as the reinforcing cords 11c and the reinforcing cords 11d are inclined oppositely, a ply steer is canceled out and the stability during high-speed straight running can be improved.

If the above-mentioned angles α1 and α2 are less than 15 degrees, then it becomes difficult to control the deformation of the tread portion 2 during cornering. If the angles α1 and α2 are more than 40 degrees, then it becomes difficult to control the lifting of the tread portion 2.

If the width CW1,CW2 is less than 25 %, then it becomes difficult to sufficiently increase the rigidity of the shoulder regions Sh. If the width CW1,CW2 is more than 40 %, then the bending rigidity of the tread crown region Cr increases, and as a result, ride comfort and running stability during straight running tend to deteriorate.

### Comparison tests

Motorcycle tires of size 120/70ZR17 (rim size MT3.5X17) were prepared and tested as follows.

All of the test tires had same structures except for the shoulder reinforcing layers 11A and 11B. The specifications are shown in Table 1.

In a comparison test, the test tire was fitted to the front wheel of a 1300 cc motorcycle (tire pressure 250 kPa), and during running on a dry asphalt road in a tire test course, the maximum possible lean angle, the steering stability and steering response (inclusive of rigid feeling and hold-on feeling) at large lean angles, the straight running stability, ride comfort and the like were evaluated into five ranks by the test rider, wherein the larger the rank number, the better the performance. The results are indicated in Table 1.

High speed durability test: According to the test procedure prescribed by ECE75, the test tire was rotated under a tire load of 1.75 kN by the use of a tire test drum, and up to an initial speed of 230 km/h, the rotational speed was gradually increased taking 20 minutes, then the rotational speed was increased every 10 minutes by a step of 10 km/h until a separation failure occurred on the tread rubber to obtain the breakdown speed at which the separation failure occurred and the running time at the breakdown speed. The results are indicated in Table 1 by an index based on Ref.1 tire being 100. The larger the value, the better the high speed durability.

From the test results, it was confirmed that the steering stability, ride comfort and straight running stability can be improved, while maintaining the high-speed durability. Further, the steering response at large lean angles (including rigid feeling and hold-on feeling) can be improve, therefore, the rider can increase the lean angle without anxiety.

**Table 1 [part 1 of 3]**

| Tire | Ref.1 | Ref.2 | Ref.3 | Ref.4 | Ex.1 | Ex.2 |
|---|---|---|---|---|---|---|
| Tread portion | | | | | | |
| developed width TW (mm) | 170 | 170 | 170 | 170 | 170 | 170 |
| Carcass | | | | | | |
| number of plies | 2 | 2 | 2 | 2 | 2 | 2 |
| Carcass cord | nylon | nylon | nylon | nylon | nylon | nylon |
| angle γ (deg.) | +-72 | +-72 | +-72 | +-72 | +-72 | +-72 |
| Tread reinforcement (No. of Fig.) | 3 | 4 | 2 | 2 | 2 | 2 |
| Full-width reinforcing layer 12 | | | | | | |
| cord material: aramid | aramid | aramid | aramid | aramid | aramid | aramid |
| developed width PW (mm) | 140 | 140 | 140 | 140 | 140 | 140 |
| Shoulder reinforcing layers 11A,11B | | | | | | |
| Reinforcing cords 11c,11d | - | nylon | nylon | nylon | nylon | nylon |
| angle α1 (deg.) | - | 20 | 60 | 10 | 15 | 20 |
| angle α2 (deg.) | - | 20 | 60 | 10 | 15 | 20 |
| inclining directions *1 | - | A1 | A1 | A1 | A1 | A1 |
| developed width CW1 (mm) | - | 40 | 40 | 40 | 40 | 40 |
| developed width CW2 (mm) | - | 40 | 40 | 40 | 40 | 40 |
| (CW1/TW)X100 (%) | - | 23.5 | 23.5 | 23.5 | 23.5 | 23.5 |
| (CW2/TW)X100 (%) | - | 23.5 | 23.5 | 23.5 | 23.5 | 23.5 |
| protruding edge portions 13 exist? | - | - | yes | yes | yes | yes |
| developed width L1 (mm) | - | - | 3 | 3 | 3 | 3 |
| Central reinforcing layer 14 | | | | | | |
| Reinforcing cord | nylon | - | - | - | - | - |
| angle α (deg.) | 72 | - | - | - | - | - |
| developed width CW (mm) | 105 | - | - | - | - | - |
| Test results | | | | | | |
| Steering stability | 3.5 | 3.8 | 3.5 | 3.5 | 4.0 | 4.0 |
| maximum possible lean angle | 3.5 | 4.0 | 3.5 | 3.5 | 4.0 | 4.0 |
| steering response at large lean angles | 3.5 | 4.0 | 2.5 | 3.5 | 4.0 | 4.0 |
| Ride comfort | 3.5 | 4.0 | 4.0 | 4.0 | 4.0 | 4.0 |
| Straight running stability | 3.5 | 3.3 | 4.0 | 4.0 | 4.0 | 4.0 |
| High-speed durability | 100 | 120 | 120 | 120 | 120 | 120 |

| | | | | | | |
|---|---|---|---|---|---|---|
| *1) A1: inclined to axially inside (Tire equator C) towards Rotational direction R A2: inclined to axially outside (Tread edges 3e) towards Rotational direction R | | | | | | |

**Table 1 [part 2 of 3]**

| Tire | Ex.3 | Ex.4 | Ex.5 | Ex.6 | Ex.7 | Ex.8 |
|---|---|---|---|---|---|---|
| Tread portion | | | | | | |
| developed width TW (mm) | 170 | 170 | 170 | 170 | 170 | 170 |
| Carcass | | | | | | |
| number of plies | 2 | 2 | 2 | 2 | 2 | 2 |
| Carcass cord | nylon | nylon | nylon | nylon | nylon | nylon |
| angle γ (deg.) | +-72 | +-72 | +-72 | +-72 | +-72 | +-72 |
| Tread reinforcement (No. of Fig.) | 2 | 2 | 2 | 2 | 2 | 2 |
| Full-width reinforcing layer 12 | | | | | | |
| cord material: aramid | aramid | aramid | aramid | aramid | aramid | aramid |
| developed width PW (mm) | 140 | 140 | 140 | 140 | 140 | 140 |
| Shoulder reinforcing layers 11A,11B | | | | | | |
| Reinforcing cords 11c,11d | nylon | nylon | nylon | nylon | nylon | nylon |
| angle α1 (deg.) | 30 | 40 | 20 | 20 | 20 | 20 |
| angle α2 (deg.) | 30 | 40 | 20 | 20 | 20 | 20 |
| inclining directions *1 | A1 | A1 | A1 | A1 | A1 | A1 |
| developed width CW1 (mm) | 40 | 40 | 25 | 30 | 45 | 50 |
| developed width CW2 (mm) | 40 | 40 | 25 | 30 | 45 | 50 |
| (CW1/TW)X100 (%) | 23.5 | 23.5 | 23.5 | 17.6 | 26.5 | 29.4 |
| (CW2/TW)X100 (%) | 23.5 | 23.5 | 23.5 | 17.6 | 26.5 | 29.4 |
| protruding edge portions 13 exist ? | yes | yes | yes | yes | yes | yes |
| developed width L1(mm) | 3 | 3 | 3 | 3 | 3 | 3 |
| Central reinforcing layer 14 | | | | | | |
| Reinforcing cord | - | - | - | - | - | - |
| angle α (deg.) | - | - | - | - | - | - |
| developed width CW (mm) | - | - | - | - | - | - |
| Test results | | | | | | |
| Steering stability | 4.0 | 4.0 | 4.0 | 4.0 | 4.0 | 4.0 |
| maximum possible lean angle | 4.0 | 3.5 | 3.5 | 4.0 | 4.0 | 4.2 |
| steering response at large lean angles | 4.0 | 3.8 | 3.5 | 3.8 | 4.0 | 3.8 |
| Ride comfort | 4.0 | 4.0 | 4.2 | 4.1 | 3.8 | 3.7 |
| Straight running stability | 3.8 | 3.8 | 4.0 | 4.0 | 3.8 | 3.6 |
| High-speed durability | 120 | 120 | 130 | 120 | 115 | 110 |

| | | | | | | |
|---|---|---|---|---|---|---|
| *1) A1 : inclined to axially inside (Tire equator C) towards Rotational direction R A2: inclined to axially outside (Tread edges 3e) towards Rotational direction R | | | | | | |

**Table 1 [part 3 of 3]**

| Tire | Ex.9 | Ex.10 | Ex.11 | Ex.12 | Ex.13 |
|---|---|---|---|---|---|
| Tread portion | | | | | |
| developed width TW (mm) | 170 | 170 | 170 | 170 | 170 |
| Carcass | | | | | |
| number of plies | 2 | 2 | 2 | 2 | 2 |
| Carcass cord | nylon | nylon | nylon | nylon | nylon |
| angle γ (deg.) | +-72 | +-72 | +-72 | +-72 | +-72 |
| Tread reinforcement (No. of Fig.) | 2 | 2 | 2 | 2 | 2 |
| Full-width reinforcing layer 12 | | | | | |
| cord material: aramid | aramid | aramid | aramid | aramid | aramid |
| developed width PW (mm) | 140 | 140 | 140 | 140 | 140 |
| Shoulder reinforcing layers 11A,11B | | | | | |
| Reinforcing cords 11c,11d | nylon | nylon | nylon | nylon | nylon |
| angle α1 (deg.) | 20 | 20 | 20 | -20 | 20 |
| angle α2 (deg.) | 20 | 20 | 20 | 20 | 20 |
| inclining directions *1 | A1 | A1 | B1 | | A1 |
| developed width CW1 (mm) | 55 | 40 | 40 | 40 | 50 |
| developed width CW2 (mm) | 55 | 40 | 40 | 40 | 40 |
| (CW1/TW)X100 (%) | 32.4 | 23.5 | 23.5 | 23.5 | 29.4 |
| (CW2/TW)X100 (%) | 32.4 | 23.5 | 23.5 | 23.5 | 23.5 |
| protruding edge portions 13 exist ? | yes | no | yes | yes | yes |
| developed width L1(mm) | 3 | - | 3 | 3 | 3 |
| Central reinforcing layer 14 | | | | | |
| Reinforcing cord | - | - | - | - | - |
| angle α (deg.) | - | - | - | - | - |
| developed width CW (mm) | - | - | - | - | - |
| Test results | | | | | |
| Steering stability | 4.0 | 4.0 | 4.0 | 3.5 | 3.5 |
| maximum possible lean angle | 4.2 | 4.0 | 3.8 | 4.0 | 4.0 |
| steering response at large lean angles | 3.5 | 4.0 | 3.8 | 3.8 | 3.8 |
| Ride comfort | 3.7 | 4.0 | 4.0 | 4.0 | 4.0 |
| Straight running stability | 3.6 | 4.0 | 4.0 | 4.0 | 4.0 |
| High-speed durability | 110 | 105 | 120 | 120 | 120 |

| | | | | | |
|---|---|---|---|---|---|
| *1) A1: inclined to axially inside (Tire equator C) towards Rotational direction R A2: inclined to axially outside (Tread edges 3e) towards Rotational direction R | | | | | |

## Claims

1. A motorcycle tire (1) comprising
a tread portion (2),
a pair of sidewall portions (3),
a pair of bead portions (4),
a carcass (6) extending between the bead portions (4) through the tread portion (2) and sidewall portions (3), and
a tread reinforcement (7) disposed radially outside the carcass (6) in the tread portion (2), wherein
the tread reinforcement (7) is composed of:
a pair of axially-spaced shoulder reinforcing layers (11A, 11B) each disposed in one of tread shoulder portions (Sh) and made of reinforcing cords (11c, 11d) inclined at an angle (α1, α2) of from 15 to 40 degrees with respect to the tire circumferential direction; and
a full-width reinforcing layer (12) disposed radially outside the shoulder reinforcing layers (11A, 11B) and made of at least one reinforcing cord (12c) wound helically at an angle of not more than 10 degrees with respect to the tire circumferential direction so that the full-width reinforcing layer (12) extends across a substantially full width of the tread portion (2),
wherein the carcass (6) is composed of a first ply (6A) and a second ply (6B) each made of carcass cords (6c, 6d) arranged radially at an angle (γ) of less than 90 degrees but not less than 60 degrees with respect to the tire equator (C), and with respect to the tire equator (C), the carcass cords of the first ply (6A) are inclined oppositely to the carcass cords of the second ply (6B),
wherein with respect to the tire circumferential direction, the reinforcing cords (11c) of one of the shoulder reinforcing layers (11A) are inclined oppositely to the reinforcing cords (11d) of the other shoulder reinforcing layer (11B),
wherein the carcass (6) and the tread reinforcement (7) constitute a reinforcing-cord structure which has
a central part (Cr) of a three-layered structure made up of the reinforcing cord(s) of the full-width reinforcing layer (12), the carcass cords (6d) of the first carcass ply (6A) and the carcass cords (6d) of the second carcass ply (6B), and
a pair of lateral parts of a four-layered structure made up of the reinforcing cord(s) (12c) of the full-width reinforcing layer (12), the reinforcing cords (11c, 11d) of the shoulder reinforcing layers (11A, 11B), the carcass cords (6c) of the first carcass ply (6A), and the carcass cords (6d) of the second carcass ply (6B),
wherein the central part (Cr) has a developed width of not less than 20 %, but not more than 50 % of the developed width TW of the tread portion (2),
**characterized in that**
the lateral parts of the four-layered structure each has a developed width (CW1, CW2) of not less than 25 % but not more than 40 % of the developed width of the tread portion (2),
the full-width reinforcing layer (12) has axial edges (12t) positioned axially outside the axial outer edges (11t) of the shoulder reinforcing layers (11A, 11B), and
the developed width (L1) of each edge portion (13) of the full-width reinforcing layer (12) protruding axially outwardly from the axial outer edge (11t) of the respective shoulder reinforcing layer (11A, 11B) is set in a range of not less than 2 mm.

2. The motorcycle tire (1) according to claim 1, wherein
the tread portion (2) is provided with tread grooves (TG) defining a unidirectional tread pattern having an intended tire rotational direction (R), and
the reinforcing cords (11c, 11d) of the shoulder reinforcing layers (11A, 11B) are inclined to the tire equator (C) toward the tire rotational direction (R).

3. The motorcycle tire (1) according to claim 1 or 2, wherein
the shoulder reinforcing layers (11A, 11B) each have a developed width (CW1, CW2) of not less than 25 % but not more than 40 % of the developed width (TW) of the tread portion (2).

## Patentansprüche

1. Motorradreifen (1), umfassend
einen Laufflächenabschnitt (2),
ein Paar Seitenwandabschnitte (3),
ein Paar Wulstabschnitte (4),
eine Karkasse (6), die sich zwischen den Wulstabschnitten (4) durch den Laufflächenabschnitt (2) und Seitenwandabschnitte (3) erstreckt, und
eine Laufflächenverstärkung (7), die radial außerhalb der Karkasse (6) in dem Laufflächenabschnitt (2) angeordnet ist, wobei die Laufflächenverstärkung (7) zusammengesetzt ist aus:
einem Paar axial beabstandeten Schulterverstärkungsschichten (11A, 11 B), die jeweils in einem der Laufflächenschulterabschnitte (Sh) angeordnet und aus Verstärkungskorden (11c, 11d) hergestellt sind, die unter einem Winkel (α1, α2) von 15 bis 40 Grad mit Bezug auf die Reifenumfangsrichtung geneigt sind; und
einer Verstärkungsschicht mit voller Breite (12), die radial außerhalb der Schulterverstärkungsschichten (11A, 11B) angeordnet und aus zumindest einem Verstärkungskord (12c) hergestellt ist, der wendelförmig unter einem Winkel von nicht mehr als 10 Grad mit Bezug auf die Reifenumfangsrichtung gewickelt ist, so dass die Verstärkungsschicht mit voller Breite (12) sich über eine im Wesentlichen volle Breite des Laufflächenabschnitts (2) erstreckt,
wobei die Karkasse (6) aus einer ersten Lage (6A) und einer zweiten Lage (6B) zusammengesetzt ist, die jeweils aus Karkasskorden (6a, 6d) hergestellt sind, die radial unter einem Winkel (γ) von weniger als 90 Grad aber nicht weniger als 60 Grad mit Bezug auf den Reifenäquator (C) angeordnet sind, und, mit Bezug auf den Reifenäquator (C), die Karkasskorde der ersten Lage (6A) entgegengesetzt zu den Karkasskorden der zweiten Lage (6B) geneigt sind,
wobei, mit Bezug auf die Reifenumfangsrichtung, die Verstärkungskorde (11c) von einer der Schulterverstärkungsschichten (11A) entgegengesetzt zu den Verstärkungskorden (11d) der anderen Schulterverstärkungsschicht (11 B) geneigt sind,
wobei die Karkasse (6) und die Laufflächenverstärkung (7) eine Verstärkungskordstruktur bilden, die aufweist
einen zentralen Teil (Cr) mit einer dreischichtigen Struktur, die aus dem/den Verstärkungkord/Verstärkungskorden der Verstärkungsschicht mit voller Breite (12), den Karkasskorden (6d) der ersten Karkasslage (6A) und den Karkasskorden (6d) der zweiten Karkasslage (6B) hergestellt ist, und
ein Paar Seitenteile mit einer vierschichtigen Struktur, die aus dem/den Verstärkungkord/Verstärkungskorden (12c) der Verstärkungsschicht mit voller Breite (12), den Verstärkungkorden (11c, 11d) der Schulterverstärkungsschichten (11A, 11 B), den Karkasskorden (6c) der ersten Karkasslage (6A) und den Karkasskorden (6d) der zweiten Karkasslage (6B) hergestellt ist,
wobei der zentrale Teil (Cr) eine Abwicklungsbreite von nicht weniger als 20 %, aber nicht mehr als 50 % der Abwicklungsbreite TW des Laufflächenabschnitts (2) aufweist,
**dadurch gekennzeichnet, dass**
die Seitenteile mit der vierschichtigen Struktur jeweils eine Abwicklungsbreite (CW1, CW2) von nicht weniger als 25 %, aber nicht mehr als 40 % der Abwicklungsbreite des Laufflächenabschnitts (2) aufweisen,
die Verstärkungsschicht mit voller Breite (12) axiale Kanten (12t) aufweist, die axial außerhalb der axial äußeren Kanten (11t) der Schulterverstärkungsschichten (11A, 11 B) angeordnet sind, und
die Abwicklungsbreite (L1) jedes Kantenabschnitts (13) der Verstärkungsschicht mit voller Breite (12), die axial nach außen von der axial äußeren Kante (11t) der jeweiligen Schulterverstärkungsschicht (11A, 11B) vorstehen, in einem Bereich von nicht weniger als 2 mm festgelegt ist.

2. Motorradreifen (1) nach Anspruch 1, wobei
der Laufflächenabschnitt (2) mit Laufflächenrillen (TG) versehen ist, die ein unidirektionales Laufflächenprofil definieren, das eine vorgesehene Reifendrehrichtung (R) aufweist, und
die Verstärkungskorde (11c, 11d) der Schulterverstärkungsschichten (11A, 11 B) zu dem Reifenäquator (C) zu der Reifendrehrichtung (R) hin geneigt sind.

3. Motorradreifen (1) nach Anspruch 1 oder 2,
wobei die Schulterverstärkungsschichten (11A, 11 B) jeweils eine Abwicklungsbreite (CW1, CW2) von nicht weniger als 25 %, aber nicht mehr als 40 % der Abwicklungsbreite (TW) des Laufflächenabschnitts (2) aufweisen.

## Revendications

1. Pneumatique de motocyclette (1) comprenant
une portion formant bande de roulement (2),
une paire de portions formant parois latérales (3),
une paire de portions formant talons (4),
une carcasse (6) s'étendant entre les portions formant talons (4) via la portion formant bande de roulement (2) et les portions formant parois latérales (3), et
un renforcement de roulement (7) disposé radialement à l'extérieur de la carcasse (6) dans la portion formant bande de roulement (2), dans lequel
le renforcement de roulement (7) est composé de :
une paire de couches de renforcement d'épaulement axialement espacées (11A, 11B) disposées chacune dans l'une des portions d'épaulement (Sh) de la bande de roulement et réalisées de câblés de renforcement (11c, 11d) inclinés sous un angle (α1, α2) de 15 à 40° par rapport à la direction circonférentielle du pneumatique ; et
une couche de renforcement en pleine largeur (12) disposée radialement à l'extérieur des couches de renforcement d'épaulement (11A, 11B) et réalisée d'au moins un câblé de renforcement (12c) enroulé en hélice sous un angle qui ne dépasse pas 10° par rapport à la direction circonférentielle du pneumatique de telle sorte que la couche de renforcement en pleine largeur (12) s'étend sensiblement à travers la totalité de la largeur de la portion formant bande de roulement (2),
dans lequel la carcasse (6) est composée d'une première nappe (6A) et d'une seconde nappe (6B) réalisées chacune de câblés de carcasse (6c, 6d) agencés radialement sous un angle (γ) de moins de 90° mais pas plus que 60° par rapport à l'équateur de pneumatique (C) et, par rapport à l'équateur de pneumatique (C), les câblés de carcasse de la première nappe (6A) sont inclinés de façon opposée aux câblés de carcasse de la seconde nappe (6B),
dans lequel, par rapport à la direction circonférentielle du pneumatique, les câblés de renforcement (11c) de l'une des couches de renforcement d'épaulement (11A) sont inclinés de façon opposée aux câblés de renforcement (11d) de l'autre couche de renforcement d'épaulement (11B),
dans lequel la carcasse (6) et le renforcement de la bande de roulement (7) constitue une structure de câblés de renforcement qui comprend
une partie centrale (Cr) d'une structure à trois couches constituée du ou des câblés de renforcement de la couche de renforcement en pleine largeur (12), des câblés de carcasse (6d) de la première nappe de carcasse (6A) et des câblés de carcasse (6d) de la seconde nappe de carcasse (6B), et
une paire de parties latérales d'une structure à quatre couches constituée du ou des câblés de renforcement (12c) de la couche de renforcement en pleine largeur (12), des câblés de renforcement (11c, 11d) des couches de renforcement d'épaulement (11A, 11B), des câblés de carcasse (6c) de la première nappe de carcasse (6A), et des câblés de carcasse (6d) de la seconde nappe de carcasse (6B),
dans lequel la partie centrale (Cr) a une largeur développée qui n'est pas inférieure à 20 %, mais qui ne dépasse pas 50 % de la largeur développée TW de la portion formant bande de roulement (2),
**caractérisé en ce que**
les parties latérales de la structure à quatre couches ont une largeur développée (CW1, CW2) qui n'est pas inférieure à 25 % mais pas supérieure à 40 % de la largeur développée de la portion formant bande de roulement (2),
la couche de renforcement en pleine largeur (12) possède des bordures axiales (12t) positionnées axialement à l'extérieur des bordures axialement extérieures (11t) des couches de renforcement d'épaulement (11A, 11B), et
la largeur développée (L1) de chaque portion de bordure (13) de la couche de renforcement en pleine largeur (12) en projection axiale à l'extérieur de la bordure axialement extérieure (11t) de la couche de renforcement d'épaulement respective (11A, 11B) est fixée dans une plage qui n'est pas inférieure à 2 mm.

2. Pneumatique de motocyclette (1) selon la revendication 1, dans lequel
la portion formant bande de roulement (2) est dotée de rainures de roulement (TG) définissant un motif de roulement unidirectionnel ayant une direction de rotation de consigne (R) pour le pneumatique, et les câblés de renforcement (11c, 11d) des couches de renforcement d'épaulement (11A, 11B) sont inclinés vers l'équateur de pneumatique (C) en direction de la direction de rotation (R) du pneumatique.

3. Pneumatique de motocyclette (1) selon la revendication 1 ou 2, dans lequel
les couches de renforcement d'épaulement (11A, 11B) ont chacune une largeur développée (CW1, CW2) qui n'est pas inférieure à 25 % mais pas supérieure à 40 % de la largeur développée (TW) de la portion formant bande de roulement (2).
